# DEMANDE DE BREVET EUROPEEN

(11) **EP 4 840 282 A1**
(43) Date de publication de la demande: **18.11.2026**
(21) Numéro de dépôt: 26176701.6
(22) Date de dépôt: 05.05.2026
(51) Int. Cl.: A01D 34/00, A01D 43/00

(54) **MACHINE AGRICOLE COMPORTANT UNE VIS SANS FIN ET UN DÉFLECTEUR DE PRODUIT**

(30) Priorité: 14.05.2025 FR 2505096
(71) Demandeur: Kuhn SAS, 67700 Saverne (FR)
(72) Inventeur: BRUYEN, Thomas, 57370 HANGVILLER (FR)

(57) **Abrégé**

[L'invention traite d'une machine de fenaison comportant un châssis et au moins une unité articulée avec le châssis, ainsi qu'un dispositif de récolte permettant de récolter un produit végétal et un convoyeur permettant de former un andain avec le produit récolté et comportant une vis sans fin pouvant être entrainée en rotation autour d'un axe de rotation et présentant au moins une spire, un caisson de guidage s'étendant au moins partiellement sous et derrière la vis, le caisson présentant une ouverture radiale située derrière une portion de la vis attenante à l'extrémité intérieure de la ou chaque spire, la machine comporte un déflecteur au moins partiellement positionné derrière la vis, et en ce que le déflecteur présente au moins une surface déflectrice orientée transversalement à l'axe de rotation.

## Description

La présente invention se rapporte au domaine du machinisme agricole, et a pour objet une machine agricole de fenaison comportant une vis sans fin et un déflecteur de produit.

Plus précisément, l'invention concerne une machine de fenaison comportant un châssis et au moins une unité articulée avec le châssis et comportant un dispositif de récolte permettant de récolter un produit végétal, et un convoyeur permettant de former un andain avec le produit récolté et comportant une vis sans fin pouvant être entrainée en rotation autour d'un axe de rotation et présentant au moins une spire, un caisson de guidage s'étendant au moins partiellement sous et derrière la vis, le caisson présentant une ouverture radiale située derrière une portion de la vis attenante à l'extrémité intérieure de la ou chaque spire.

Une telle machine de fenaison est connue du document EP 2 829 168 A1. Sur cette machine, au moins une paroi du caisson de guidage peut être retirée, créant une ouverture radiale située derrière la portion de la vis attenante à l'extrémité intérieure de la spire. Le produit situé devant l'ouverture ainsi formée peut alors être éjecté radialement du convoyeur par cette ouverture radiale. Une telle machine peut ainsi former un andain central étroit lorsque le caisson ne comporte pas d'ouverture derrière et sous la vis, et, un andain plus large lorsqu'au moins une paroi est retirée.

Un inconvénient de la machine du document EP 2 829 168 A1 est que la quantité de produit passant par l'ouverture radiale - lorsqu'au moins une paroi est retirée - n'est pas constante, mais peut notamment dépendre de la quantité et/ou du volume de produit présent dans le caisson, de sorte que la largeur et la forme de l'andain peuvent varier. Un autre inconvénient de cette machine est l'encombrement de la ou des parois amovibles, leur poids, et le temps nécessaire pour les monter, démonter et/ou les déplacer. Par ailleurs, des tests réalisés sur une machine semblable à celle décrite dans le document EP 2 829 168 A1, avec un caisson ne présentant pas d'ouverture derrière la vis, ont montré que le produit était éjecté axialement avec une force telle qu'elle induit des projections de produit loin de la machine, parfois en dehors de la largeur désirée de l'andain. L'andain obtenu peut ainsi être plus large que souhaité, pouvant impliquer qu'une partie du produit n'est pas recueilli par la machine de ramassage, impliquant une perte de produit, et donc une qualité de travail moindre. Dans le cas où la machine dépose le produit au-dessus et/ou à côté d'un andain préalablement formé et présent au sol, par une unité frontale par exemple, la force du flux de produit peut aussi être telle qu'elle déforme cet andain préalablement formé, induisant un andain irrégulier, compliquant son ramassage. Enfin, dans le cas d'une machine comportant deux convoyeurs dont les flux de produit s'opposent, la rencontre entre ces flux de sens opposés peut entrainer une dispersion de produit et donc davantage de pertes ainsi qu'un andain encore plus hétérogène.

Le document EP 3 332 628 A1 décrit également une machine proche de celle décrite en introduction. Sur cette machine, un déflecteur situé sous le châssis permet d'amortir ou respectivement de stopper le flux axial et d'empêcher le produit d'être éjecté à une distance trop importante suivant l'axe de rotation, maintenant l'andain en dessous d'une largeur désirée. Un inconvénient de cette réalisation est l'emplacement du déflecteur, sous le châssis, notamment en combinaison avec que le fait qu'il s'étende sensiblement jusqu'au sol. Un tel déflecteur risque en effet d'être endommagé et/ou d'endommager le sol lors du déplacement de la machine sur un sol irrégulier. Dans le cas où la machine est sensée déposer son andain par-dessus et/ou à côté d'un autre andain préalablement formé et présent au sol, un tel déflecteur risque en outre de défaire ou de perturber l'andain présent au sol, le rendant plus hétérogène et compliquer son ramassage.

La présente invention a pour but de présenter une alternative aux solutions existantes précitées. Elle a également pour but de pallier au moins certains des inconvénients précités. A cet effet, l'invention propose une machine agricole selon la revendication 1. Différents modes de réalisation ainsi que le mode préféré sont expliqués dans cette description avec référence aux figures annexées, dans lesquelles :
[Fig. 1] représente une machine de fenaison selon le mode préféré de l'invention avec deux unités latérales, en vue de dessus ;
[Fig. 2] représente une unité latérale en vue de derrière, dans une position extérieure du déflecteur, suivant une variante simplifiée (sans protection arrière ni paroi rabatteuse) ;
[Fig. 3] représente une vue de détail d'une unité latérale de la machine de la figure 1, en vue de derrière et dans une position intérieure du déflecteur ;
[Fig. 4] représente l'unité latérale de la figure 3, suivant la coupe représentée sur la figure 3, vue suivant l'axe de rotation de la vis, dans une autre position du déflecteur ;
[Fig. 5] représente une machine vue depuis l'arrière et suivant le sens d'avance, selon un deuxième mode de réalisation dans lequel un déflecteur est positionné derrière chaque spire du convoyeur.

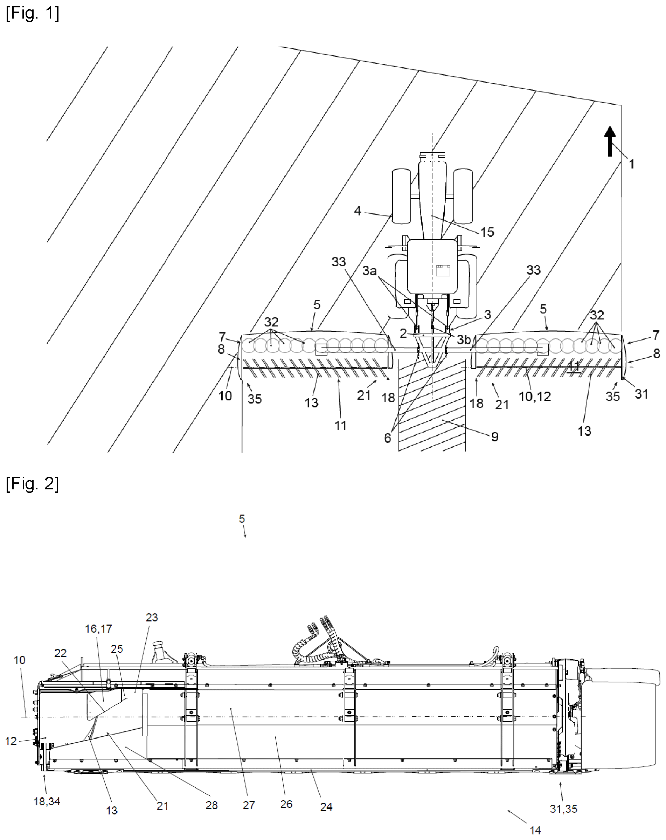

Tel qu'illustré sur la figure 1, la machine de fenaison selon l'invention peut se déplacer dans un sens d'avance 1 lors de son fonctionnement. Cette machine de fenaison comporte un châssis 2. Sur la figure 1, le châssis 2 comporte à son extrémité frontale un dispositif d'accouplement 3. Le dispositif d'accouplement 3 permet de relier le châssis 2 à un tracteur 4 agricole.

La machine, respectivement le châssis 2, présente un plan central 15. Au moins un entre la machine, le châssis 2 et le tracteur 4 est sensiblement symétrique par rapport au plan central 15, et de préférence tous les trois. Le ou chaque dispositif d'accouplement 3 présente deux tourillons inférieurs 3a et un tourillon supérieur 3b. Le dispositif d'accouplement 3 peut être relié à l'attelage trois points du tracteur 4 au moyen des tourillons inférieurs 3a et du tourillon supérieur 3b. Alternativement, le dispositif d'accouplement 3 peut être relié au tracteur 4 par un simple pivot. Le plan central 15 passe par le tourillon supérieur 3b de l'attelage trois points du tracteur 4. Le plan central 15 est vertical. Le plan central 15 est aussi parallèle au sens d'avance 1.

La machine comporte au moins une unité 5,5'. Dans le mode de réalisation préféré de la figure 1, chaque unité 5,5' est une unité latérale 5. Une unité latérale 5 est décalée latéralement par rapport au châssis 2 vu suivant le sens d'avance 1. De préférence, la ou chaque unité latérale 5 est aussi décalée latéralement par rapport au tracteur 4 vu suivant le sens d'avance 1. La ou chaque unité latérale 5 est située à l'arrière du tracteur 4. Notamment en vue d'un bon suivi de terrain, la ou chaque unité 5,5' est articulée avec le châssis 2. De manière simple, l'unité latérale 5 est montée pivotante avec le châssis 2 suivant un axe de soulèvement 6 sensiblement parallèle au sens d'avance 1.

Dans ce document, le terme « largeur » désigne la dimension mesurée perpendiculairement au sens d'avance 1 et horizontalement. Dans ce document, les orientations sont définies pour une machine sur un sol plan et horizontal. Ainsi, la droite passant par les tourillons inférieurs 3a est sensiblement horizontale. Dans ce document, le terme « derrière » est à considérer par rapport au le sens d'avance 1, et les termes « intérieur » et « extérieur » sont à considérer par rapport au plan central 15. Autrement dit, une partie intérieure est plus proche du plan central 15 qu'une partie extérieure. Par ailleurs, « incliné vers l'arrière » revient sensiblement à ce que l'extrémité arrière est située plus haute que l'extrémité avant de la partie considérée. Il est également souligné que « vu suivant le sens d'avance 1 » revient à se placer derrière la machine en regardant dans le sens d'avance 1.

La ou chaque unité 5,5' comporte un dispositif de récolte 7 permettant de récolter un produit végétal. Le produit est préférentiellement de l'herbe. Le produit peut être présent au sol et/ou encore sur pied. La ou chaque unité 5,5' comporte également un convoyeur 8. Le convoyeur 8 permet de former un andain 9 avec le produit récolté (par le dispositif de récolte 7), afin de le recueillir plus rapidement avec une machine de ramassage telle qu'une presse ou une autochargeuse. Le tracteur 4 permet de déplacer la machine. Le tracteur 4 est aussi la source motrice permettant d'entrainer le dispositif de récolte 7 et/ou le convoyeur 8. Dans une variante de réalisation non représentée, le châssis 2 et la ou les unités 5,5' font partie d'une machine automotrice.

Le convoyeur 8 comporte une vis 11 sans fin pouvant être entrainée en rotation autour d'un axe de rotation 10. La vis 11 présente une âme 12. L'âme 12 est un cylindre, de préférence circulaire droit, centré autour de l'axe de rotation 10. Afin de déplacer le produit suivant l'axe de rotation 10, la vis 11 présente au moins une spire 13, préférentiellement hélicoïdale. La ou chaque spire 13 est orientée de manière à déplacer le produit vers l'intérieur (de la vis 11) lorsque la vis 11 est entrainée en rotation. Respectivement, la ou chaque spire 13 est agencée pour déplacer le produit vers le plan central 15.

En vue de maintenir le produit proche de la vis 11 et d'assurer ainsi son déplacement, le convoyeur 8 comporte également un caisson 14 de guidage s'étendant au moins partiellement sous et derrière la vis 11. La vis 11 est située juste derrière le dispositif de récolte 7 respectif, facilitant la reprise du produit récolté par le dispositif de récolte 7 et évitant ainsi des pertes.

En fonctionnement normal, le dispositif de récolte 7 transmet le produit récolté au convoyeur 8 qui le déplace grossièrement suivant l'axe de rotation 10. L'axe de rotation 10 est transversal au sens d'avance 1. Afin de maximiser la largeur de travail de la machine, respectivement de l'unité 5,5', l'axe de rotation 10 est préférentiellement perpendiculaire au sens d'avance 1. L'axe de rotation 10 est horizontal et/ou parallèle au sol. Dans le premier mode et le mode préféré, le caisson 14 présente une ouverture axiale 18 à son extrémité intérieure dans le prolongement de la vis 11, permettant de déposer le produit latéralement, respectivement derrière le châssis 2 et/ou le tracteur 4. Sur une unité latérale 5, la vis 11 génère ainsi un flux de produit et éjecte au moins une partie du produit à travers l'ouverture axiale 18. L'ouverture axiale 18 s'étend au moins sensiblement verticalement. Préférentiellement, l'ouverture axiale 18 s'étend suivant un plan perpendiculaire à l'axe de rotation.

Le caisson 14 permet de maintenir le produit proche de la vis 11 jusqu'à son éjection. Le flux généré par la vis 11 est orienté vers le plan central 15, et préférentiellement sensiblement suivant l'axe de rotation 10. Lorsqu'il est éjecté d'une unité latérale 5, le flux de produit est orienté transversalement au sens d'avance 1. Lorsque le produit se pose sur le sol, il forme un andain 9. Grâce au déplacement de la machine, l'andain 9 s'étend parallèlement au sens d'avance 1. Une unité latérale 5 est agencée de manière à former un andain 9 derrière le châssis 2 et/ou le tracteur 4, réduisant le risque de rouler sur l'andain 9 avec le tracteur 4 et/ou de passer sur l'andain 9 avec la machine lors d'un suivant passage.

Le caisson 14 comporte au moins une paroi 24,26,27,28 située sous et/ou derrière la vis 11. Chacune des parois 24-28 s'étend parallèlement à l'axe de rotation 10. Vu suivant l'axe de rotation 10, la trajectoire 19 extérieure de la vis 11 lors de son entrainement est circulaire. Afin de permettre à la vis 11 de déplacer le produit contenu dans le caisson 14, le caisson 14 épouse la trajectoire 19. Autrement dit, chaque paroi 24-28 est proche de la trajectoire 19. Chaque paroi 24-28 est située à moins de trois centimètres de la trajectoire 19, et plus préférentiellement à moins d'un centimètre de la trajectoire 19. En vue de laisser passer le produit, aucune paroi 24-28 ne s'étend entre le dispositif de récolte 7 et le convoyeur 8.

Ainsi qu'il ressort de la figure 1, la ou chaque spire 13 présente une extrémité intérieure 34 et une extrémité extérieure 35. L'extrémité intérieure 34 d'une spire 13 est plus proche du plan central 15 que son extrémité extérieure 35. Plus précisément, la ou chaque spire 13, respectivement la forme hélicoïdale de la ou chaque spire 13, est telle que son extrémité intérieure 34 est plus proche de la zone d'éjection que son extrémité extérieure 35.

Afin de contenir le produit et de réduire le risque de perte de produit, le caisson 14 comporte au moins une cloison extérieure 31 s'étendant perpendiculairement à l'axe de rotation 10 et située à au moins une ou à l'extrémité extérieure de la vis 11.

Ainsi qu'il ressort de la figure 2, en vue d'obtenir un andain 9 large et de réduire le risque de bourrage dans le caisson 14, le caisson 14 présente une ouverture radiale 21 située derrière une portion de la vis 11 attenante à l'extrémité intérieure 34 de la ou chaque spire 13. Ainsi qu'il ressort des figures 2, 3 et 5, l'ouverture radiale 21 est située derrière la vis 11. L'ouverture radiale 21 est en outre située à proximité de l'extrémité intérieure 34 de la ou chaque spire 13. Vu suivant le sens d'avance 1, l'ouverture radiale 21 s'étend préférentiellement depuis l'extrémité intérieure 34 en direction de l'extrémité extérieure 35 de la spire 13 associée. De la sorte, au moins une partie du produit déplacé par la vis 11 peut être éjectée de la machine par cette ouverture radiale 21. L'ouverture radiale 21 s'étend parallèlement à l'axe de rotation 10, et préférentiellement sensiblement verticalement. Afin d'éviter l'accroche de produit, avec une unité latérale 5, l'ouverture axiale 18 et l'ouverture radiale 21 du caisson 14 forment une seule ouverture.

En effet, si la ou chaque spire 13 est orientée de sorte à déplacer le produit grossièrement parallèlement à l'axe de rotation 10 et en direction du plan central 15, la force centrifuge due à la rotation de la vis 11 implique qu'une partie du produit est également éjectée au travers de l'ouverture radiale 21. A partir du moment où la spire 13 s'arrête, le produit est éjecté. Respectivement, le produit est éjecté de la vis 11 dès lorsqu'il atteint l'extrémité intérieure de la spire 13. En effet, l'âme 12 de la vis 11, même en rotation, induit peu ou pas de déplacement de produit. Aussi, afin de permettre une éjection du produit au moins partiellement radialement, l'ouverture radiale 21 est au moins partiellement située entre les extrémités intérieure 34 et extérieure 35 de la spire 13, vu suivant le sens d'avance 1. En vue de réduire le prix et le poids de l'unité 5,5', le caisson 14 s'étend préférentiellement, entre les extrémités intérieure 34 et extérieure 35 de la spire 13, vu suivant le sens d'avance 1. En vue de réduire le prix et le poids de l'unité latérale 5, dans le premier mode et le mode préféré, la spire 13 de la vis 11 s'étend préférentiellement sur la même longueur que son âme 12.

Dans ce document, un bourrage est une accumulation de produit qui bloque son flux, respectivement le déplacement de produit, notamment dans le caisson 14. Un bourrage nécessite une intervention humaine manuelle parfois difficile et chronophage pour débloquer la machine, respectivement le caisson 14. Enfin, un bourrage peut impliquer des dégâts sur la machine.

Selon l'invention, la machine comporte un déflecteur 16 qui est au moins partiellement positionné derrière la vis 11. De plus, le déflecteur 16 présente au moins une surface déflectrice 17 orientée transversalement à l'axe de rotation 10. Plus précisément, au moins la surface déflectrice 17 du déflecteur 16 est au moins partiellement positionnée derrière la vis 11 vu suivant le sens d'avance 1. Plus précisément encore, la surface déflectrice 17 du déflecteur 16 est au moins partiellement positionnée, vu suivant le sens d'avance 1, derrière la spire 13 associée. En vue d'éviter un bourrage et de permettre une éjection radiale partielle du produit, la surface déflectrice 17 du déflecteur 16 est positionnée, vu suivant le sens d'avance 1, majoritairement derrière la spire 13 associée. Un tel déflecteur 16 permet de dévier une partie du produit récolté avant qu'elle n'atteigne l'extrémité intérieure 34 de la spire 13 et de la déposer plus à l'extérieur, formant ainsi un andain plus large et plus homogène. Pour simplifier, la partie du produit déviée par le déflecteur 16 est désignée par « flux dévié », et la partie n'étant pas déviée par le déflecteur 16 par « flux axial ». Le déflecteur 16 permet de rendre le flux dévié plus constant et/ou la proportion entre flux dévié et flux axial plus constante, impliquant un andain 9 plus homogène et/ou de forme plus régulière. Un autre intérêt d'un tel déflecteur 16 réside dans le fait que le flux axial est moindre que sans déflecteur 16, réduisant ainsi la force de ce flux et le risque d'éjecter du produit trop loin, évitant ainsi des pertes et/ou un andain 9 de largeur supérieure à celle souhaitée. Dans le cas où le produit, respectivement l'andain 9, est déposé par-dessus et/ou à côté d'un autre andain préalablement formé et présent au sol, le fait de réduire la force du flux axial permet également d'éviter de déformer cet andain préalablement formé, réduisant davantage le risque de perte de produit, et permettant d'obtenir un andain global plus régulier et homogène. Enfin, dans le cas d'unités latérales 5, un tel déflecteur 16 permet d'éviter d'encombrer la partie située sous et/ou derrière le châssis 2.

Un ou chaque déflecteur 16 pourrait compter plusieurs surfaces déflectrices 17 orientées différemment. De manière simple et économique, le ou chaque déflecteur 16 compte une unique surface déflectrice 17. En vue de simplifier la fabrication du déflecteur 16 et de réduire son coût de revient, la surface déflectrice 17 est préférentiellement plane. La surface déflectrice 17 peut notamment être réalisée par une tôle. Alternativement, la surface déflectrice 17 pourrait être courbe, par exemple vue suivant le sens d'avance 1.

Tel qu'il ressort des figures, à chaque spire 13 est préférentiellement associée un déflecteur 16. Une telle réalisation permet d'obtenir pour chaque spire 13, le cas échéant, au moins certains des avantages du déflecteur 16 tel que décrit ci-dessus. Il ressort des figures 2, 3 et 5 que le ou chaque déflecteur 16 est positionné à proximité de l'extrémité intérieure 34 de la spire 13 associée, permettant de former un andain proche de l'extrémité intérieure 34 de la ou des spire(s) 13.

Le ou chaque caisson 14 comporte au moins une paroi inférieure 24 s'étendant sous l'axe de rotation 10. De préférence, une paroi inférieure 24 est associée à chaque vis 11. La ou chaque paroi inférieure 24 s'étend sous et préférentiellement sur toute la largeur de la vis 11 associée.

Le ou chaque caisson 14 comporte au moins une paroi basse 26 s'étendant derrière l'axe de rotation 10. De préférence, une paroi basse 26 est associée à chaque spire 13. La paroi basse 26 s'étend sous et derrière la spire 13 associée. La paroi basse 26 s'étend depuis l'extrémité extérieure 35 de la spire 13 associée jusqu'à l'ouverture radiale 21. La paroi basse 26 s'étend au moins sur la moitié, et plus préférentiellement sur au moins trois quarts, de la largeur de la spire 13 associée.

Le ou chaque caisson 14 comporte au moins une paroi haute 27 s'étendant derrière l'axe de rotation 10. De préférence, une paroi haute 27 est associée à chaque spire 13. La paroi haute 27 s'étend au-dessus et derrière la spire 13 associée. En vue de former l'ouverture radiale 21, la paroi haute 27 ne s'étend préférentiellement pas sur toute la largeur de la spire 13 associée. La paroi haute 27 s'étend depuis l'extrémité extérieure 35 de la spire 13 associée jusqu'à l'ouverture radiale 21. La paroi haute 27 s'étend au moins sur la moitié, et plus préférentiellement au moins sur trois quarts, de la largeur de la spire 13 associée. De manière économique, chaque paroi 24-28 est réalisée par au moins une plaque, de préférence une tôle métallique. Afin de réduire le risque de bourrage, la largeur de l'ouverture radiale 21 est préférentiellement supérieure au huitième, et plus préférentiellement au sixième, de la largeur de la spire 13 associée.

Afin d'éviter des pertes de produit, le caisson 14 est accolé au dispositif de récolte 7. Plus précisément, la paroi inférieure 24, respectivement son extrémité avant, est accolée au dispositif de récolte 7. Toujours afin d'éviter des pertes de produit, la paroi inférieure 24, respectivement son extrémité arrière, est accolée à la paroi basse 26, respectivement à l'extrémité avant de la paroi basse 26. Enfin, la paroi haute 27, respectivement son extrémité arrière, est accolée à la paroi basse 26, respectivement à son extrémité arrière. Enfin, la paroi haute 27 s'étend préférentiellement jusqu'au-dessus de la vis 11.

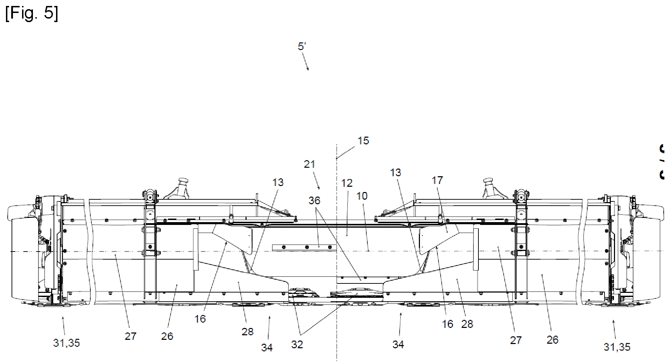

Afin de dévier au moins une partie du produit à travers l'ouverture radiale 21 et d'éviter des bourrages, ainsi qu'il ressort des figures 2 et 5, la ou chaque surface déflectrice 17 est située au moins partiellement dans l'ouverture radiale 21 vu suivant le sens d'avance 1. Autrement dit, la surface déflectrice 17 est située entre l'extrémité intérieure de la paroi haute 27 et l'extrémité intérieure 34 de la spire 13 associée. Au moins dans la position extérieure de la surface déflectrice 17 (voire plus bas), la surface déflectrice 17 est située entre l'extrémité intérieure de la paroi haute 27 et l'extrémité intérieure de la spire 13 associée. De préférence, la surface déflectrice 17 est également située au moins partiellement dans l'ouverture radiale 21 vu suivant l'axe de rotation 10.

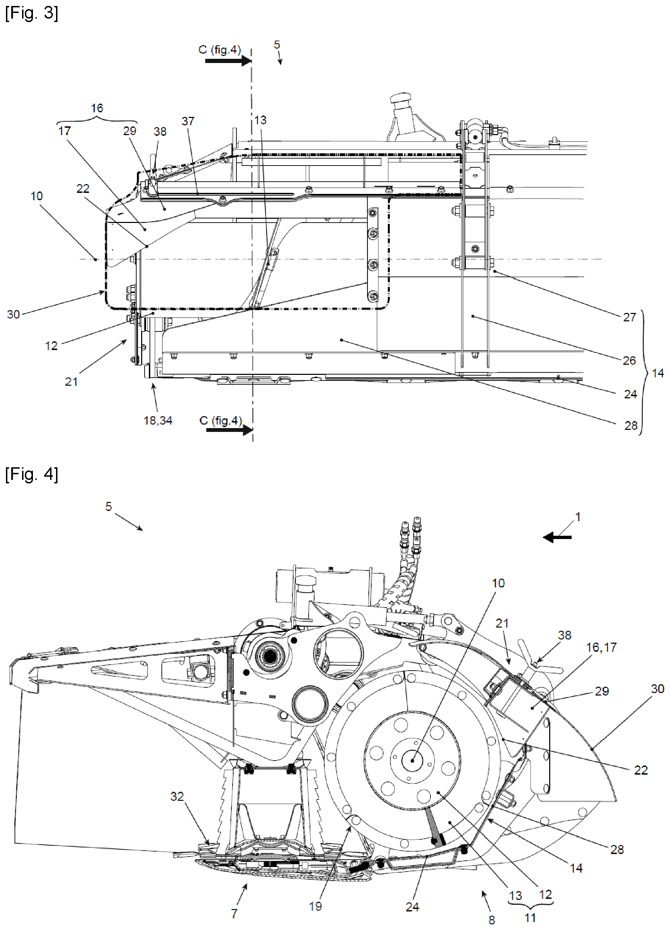

La surface déflectrice 17 présente une partie diviseuse 22. Tel que représenté sur la figure 4, la partie diviseuse 22 est la partie de la surface déflectrice 17 la plus proche de la vis 11. Sur les figures 3 et 4, la partie diviseuse 22 est une arrête de la surface déflectrice 17. Vu suivant l'axe de rotation 10, la partie diviseuse 22 est sensiblement tangentielle à la trajectoire 19. Afin d'éviter tout frottement entre le déflecteur 16 et la vis 11 tout en épousant la trajectoire 19, vu suivant l'axe de rotation 10, la partie diviseuse 22 est préférentiellement parallèle à la tangente à la trajectoire 19 passant par le point de la trajectoire 19 le plus proche de la partie diviseuse 22. La partie diviseuse 22 est évidemment située à l'extérieur de la trajectoire 19. Etant donné que le point de la trajectoire 19 le plus proche de la partie diviseuse 22 est située derrière et au-dessus de la vis 11, afin d'épouser au mieux la trajectoire 19, la partie diviseuse 22 est inclinée vers l'avant. Préférentiellement, ainsi qu'illustré sur la figure 4, la partie diviseuse 22 forme avec la verticale un angle compris entre 5° et 55°, et plus préférentiellement entre 15° et 45°.

Ainsi qu'il ressort de la figure 2 notamment, étant donné que le point de la trajectoire 19 le plus proche de la partie diviseuse 22 est située derrière et au-dessus de la vis 11, afin de réduire le risque de bourrage, la partie diviseuse 22 est en outre inclinée vers l'extérieure. La partie diviseuse 22 forme avec l'axe de rotation 10, vu suivant le sens d'avance 1, un angle compris entre 5° et 55°, et plus préférentiellement entre 15° et 45°. Alternativement, la partie diviseuse 22 pourrait être hélicoïdale, permettant que la distance entre la partie diviseuse 22 et la trajectoire 19 soit plus constante, vu suivant l'axe de rotation 10.

Afin de permettre au déflecteur 16 de dévier un maximum du produit situé à l'intérieur du caisson 14, la partie diviseuse 22, respectivement le déflecteur 16, est situé(e) à moins de trois centimètres de la trajectoire 19, et plus préférentiellement à moins d'un 1 centimètre de la trajectoire 19. En effet, plus la partie diviseuse 22 est éloignée de la vis 11, respectivement de la trajectoire 19, moins le déflecteur 16 dévie de produit. Aussi, plus la partie diviseuse 22 est éloignée de la vis 11, moins le flux dévié par le déflecteur 16 est important.

Ainsi qu'il ressort de la figure 4, afin de rabattre le flux dévié vers le sol, la surface déflectrice 17 est inclinée vers l'arrière. Respectivement, l'extrémité avant d'un bord latéral de la surface déflectrice 17 est plus basse que l'extrémité arrière du bord latéral considéré. Des tests ont démontré qu'une bonne forme d'andain 9 est obtenue lorsque l'angle entre la surface déflectrice 17 et le sol, vu suivant l'axe de rotation 10, est compris entre 30° et 60°, et plus préférentiellement encore entre 40° et 50°. Alternativement, la surface déflectrice 17 pourrait être orientée de sorte que ses bords latéraux soient horizontaux.

Tel qu'il ressort des figures, afin de réduire l'encombrement du déflecteur 16, respectivement de la surface déflectrice 17, la surface déflectrice 17 est au moins majoritairement située au-dessus l'axe de rotation 10, permettant d'éloigner le déflecteur 16 du sol, réduisant le risque d'endommager le sol et/ou le déflecteur 16 lors du déplacement de la machine sur un sol irrégulier, ainsi que le risque de défaire un andain préalablement formé, le cas échéant.

Dans un premier mode de réalisation, la machine comporte une unique unité latérale 5, préférentiellement du côté droit du plan central 15. Afin de présenter une largeur de travail plus importante et d'augmenter ainsi la vitesse du chantier agricole, dans le mode préféré, la machine comporte deux unités latérales 5, à savoir une unité latérale 5 droite et une unité latérale 5 gauche montées symétriquement par rapport au plan central 15. Chacune des unités latérales 5 est agencée de manière à déposer le produit entre les deux unités latérales 5. Ainsi, le flux axial de chaque convoyeur 8 est de sens contraire. Du fait qu'au moins un flux axial est réduit, l'impact entre les deux flux axiaux opposés est moindre, réduisant donc davantage le risque de pertes de produit et améliorant la forme et l'homogénéité de l'andain 9 global. De préférence, à chaque unité latérale 5 est associée une seule spire 13 et un seul déflecteur 16.

Dans un deuxième mode de réalisation représenté sur la figure 5, la machine comporte une unique unité frontale 5'. L'unité frontale 5' est montée sur le dispositif d'attelage avant du tracteur 4. Le châssis 2 d'une unité frontale 5' comporte un dispositif d'accouplement 3 à son extrémité arrière. De préférence, l'unité frontale 5' est centrée sur le plan central 15. L'unité frontale 5' dépose préférentiellement un andain 9 centré sur la vis 11 (et centré sur le plan central 15). Dans ce deuxième mode, le caisson 14 ne présente préférentiellement pas d'ouverture axiale 18. Dans le deuxième mode, le caisson 14 présente deux cloisons extérieures 31, chacune située à une extrémité latérale de la vis 11.

Les modes de réalisation peuvent être combinés. Une machine selon le mode de réalisation préféré ou le premier mode peut ainsi également comporter une unité frontale 5' ou être utilisée simultanément avec une machine comportant une unité frontale 5', impliquant que l'andain 9 déposé par la ou les unité(s) latérale(s) 5 est déposé sur et/ou à côté de l'andain préalablement formé par l'unité frontale 5'. Au moment où la ou les unité(s) latérale(s) 5 dépose(nt) l'andain 9, l'andain préalablement formé par l'unité frontale 5' est présent au sol.

Afin de centrer l'andain, deux spires 13 sont préférentiellement associées à la vis 11 d'une unité frontale 5'. Tel qu'il ressort de la figure 5, les deux spires 13 sont orientées différemment. Afin de diriger les flux de chaque spire 13 vers le plan central 15, les spires 13 sont symétriques par rapport au plan central 15. Aussi, chaque spire 13 est préférentiellement située d'un côté respectif du plan central 15. Dans le cas d'une unité frontale 5', le produit est déposé devant les roues avant du tracteur 4.

Avec une unité frontale 5', chaque spire 13 s'étend depuis une extrémité extérieure de l'unité frontale 5' vers le plan central 15. En vue d'éviter des pertes de produit dues à une dispersion lorsque les flux éjectés par chaque spire 13 d'une vis 11 d'une unité frontale 5' se rencontrent, chaque spire 13 ne s'étend préférentiellement pas vers l'intérieur jusqu'au plan central 15. L'extrémité extérieure 35 de chaque spire 13 est située à proximité de l'extrémité extérieure de la vis 11. Dans le deuxième mode de réalisation, l'ouverture radiale 21 s'étend également entre les extrémités intérieures 34 de chaque spire 13 en vue suivant le sens d'avance 1. Entre les extrémités intérieures 34 de chaque spire 13, l'âme 12 de la vis 11 est continue.

En vue de projeter au moins une partie du produit végétal dans la direction opposée au sens d'avance 1, la vis 11 d'une unité frontale 5' comporte préférentiellement des pâles 36 orientées radialement par rapport à l'axe de rotation 10 et situées au moins partiellement entre les extrémités intérieures 34 de chaque spire 13. Dans ce même but, l'extrémité extérieure d'au moins une pâle 36 est située à proximité de l'extrémité intérieure 34 d'au moins une spire 13. Les pâles 36 sont réparties sur le périmètre de l'âme 12, de préférence uniformément.

Dans une première variante de réalisation, le déflecteur 16 est fixe par rapport au caisson 14. Additionnellement ou alternativement, afin de permettre à l'utilisateur de choisir entre former un andain 9 large et un andain 9 étroit, le déflecteur 16 peut être démontable. Afin d'obtenir un andain 9 large, la surface déflectrice 17 est positionnée proche de l'extrémité extérieure de l'ouverture radiale 21 (figure 2). Lorsque le déflecteur 16 est démonté, le convoyeur 8 associé forme un andain 9 étroit. Un inconvénient de cette première variante est cependant de ne profiter des avantages du déflecteur 16 que lorsqu'il est monté. Aussi, dans cette première variante, il est nécessaire à l'utilisateur de monter et démonter manuellement le déflecteur 16 pour changer la largeur de l'andain 9.

Afin de profiter des avantages du déflecteur 16 pour former un andain 9 large et pour former un andain 9 étroit, le déflecteur 16 peut occuper au moins deux positions axiales. Tel que représenté sur la figure 2, le déflecteur 16 occupe une position extérieure. Dans la position extérieure du déflecteur 16, la surface déflectrice 17 est positionnée proche de l'extrémité extérieure de l'ouverture radiale 21. Dans la position extérieure du déflecteur 16, la surface déflectrice 17 est aussi plus éloignée du plan central 15 que l'extrémité intérieure 34 de la spire 13 respective. Tel que représenté sur la figure 3, le déflecteur 16 peut occuper une position intérieure. Dans la position intérieure du déflecteur 16, la surface déflectrice 17 est plus proche du plan central 15 que dans sa position extérieure. Dans la position intérieure du déflecteur 16, la surface déflectrice 17 est préférentiellement située derrière l'extrémité intérieure 34 de la spire 13 associée, vu suivant le sens d'avance 1. Aussi, dans la position intérieure du déflecteur 16, la surface déflectrice 17 est située dans l'ouverture axiale 18, vu suivant le sens d'avance 1. Ainsi, la surface déflectrice 17 peut être positionnée dans l'ouverture axiale 18 vu suivant le sens d'avance 1, ce qui permet d'augmenter les possibilités de largeurs d'andain 9 déposé par l'unité 5,5' associée. En effet, plus l'amplitude de translation de la surface déflectrice 17 est grande, plus il est possible de jouer sur la largeur de l'andain 9.

Dans une deuxième variante de réalisation, le ou chaque déflecteur 16 ne peut occuper que deux positions. Afin que l'utilisateur puisse régler la largeur de l'andain 9 déposé par le ou chaque convoyeur 8, respectivement la largeur de l'andain 9 global, le ou chaque déflecteur 16 peut préférentiellement occuper une multitude de positions axiales. Ainsi, le ou chaque déflecteur 16 est préférentiellement translatable suivant un axe parallèle à l'axe de rotation 10.

Aussi, quelle que soit la position du ou de chaque déflecteur 16, le caisson 14 présente toujours une ouverture radiale 21, réduisant avantageusement le risque de bourrage dans le caisson 14 et le risque de formation de paquets, et améliorant la forme et l'homogénéité de l'andain 9 dans toutes les positions du déflecteur 16. La surface déflectrice 17 est ainsi telle qu'elle n'obstrue jamais complètement l'ouverture radiale 21. Autrement dit, la superficie de la surface déflectrice 17 est beaucoup plus petite que la superficie de l'ouverture radiale 21. Ainsi qu'il ressort de la figure 3, la largeur de la surface déflectrice 17 est préférentiellement inférieure à la moitié de la largeur de l'ouverture radiale 21. Similairement, la hauteur de la surface déflectrice 17 est inférieure à la hauteur de l'ouverture radiale 21.

Afin de maintenir le déflecteur 16 en position, tel que représenté sur les figures 2 et 3, au moins un trou oblong 37 orienté parallèlement à l'axe de rotation 10 peut être réalisé dans le caisson 14. De préférence, un boulon 38 permet de libérer ou de bloquer, cette liaison glissière. Alternativement, le déplacement du déflecteur 16 et son maintien en position pourraient être assurés par un vérin.

En vue d'empêcher le déflecteur 16 de pivoter par rapport au caisson 14, une saillie solidaire du déflecteur 16 peut être montée coulissante dans un trou allongé réalisé dans le caisson 14 et orienté parallèlement à l'axe de rotation 10. Ce trou allongé peut être un deuxième trou oblong parallèle à l'axe de rotation 10 et réalisé dans le caisson 14. De manière simple, le trou allongé est le trou oblong 37.

L'ouverture radiale 21 est au moins partiellement limitée vers le bas par au moins une paroi de rétention 28. Afin de guider le flux axial au moins jusqu'à l'extrémité intérieure 34 de la ou chaque spire 13, le caisson 14 comporte au moins une paroi de rétention 28. De préférence, une paroi de rétention 28 est associée à chaque spire 13. La ou chaque paroi de rétention 28 s'étend derrière et sous la portion de la vis 11 attenante à l'extrémité intérieure 34 de la spire 13 associée. La ou chaque paroi de rétention 28 s'étend aussi sous l'ouverture radiale 21 vu suivant le sens d'avance 1. Une telle paroi de rétention 28 permet une séparation nette des flux axial et dévié, participant à l'obtention d'un andain 9 plus uniforme.

La paroi de rétention 28 est située dans le prolongement de la paroi basse 26. Aussi, la paroi rétention 28 s'étend depuis l'extrémité intérieure 34 de la spire 13 associée jusqu'à l'extrémité extérieure de l'ouverture radiale 21, respectivement jusqu'à la paroi basse 26. Avec une unité latérale 5, la paroi de rétention 28 s'étend sur la même largeur que l'ouverture radiale 21. Afin de laisser passer le flux dévié par l'ouverture radiale 21 tout en maintenant le flux axial sous la vis 11, la paroi de rétention 28 est entièrement située sous l'axe de rotation 10 vu suivant le sens d'avance 1. En vue de laisser passer davantage de produit par l'ouverture radiale 21, la ou chaque paroi de rétention 28 peut présenter un bord supérieur incliné vers l'extérieur, réduisant les bourrages.

L'ouverture radiale 21 peut s'étendre sur toute la hauteur du caisson 14. Dans le deuxième mode de réalisation, l'ouverture radiale 21 s'étend sur toute la hauteur du caisson 14 entre les parois de rétention 28. Ainsi, dans le deuxième mode, l'ouverture radiale 21 s'étend aussi entre les deux parois de rétention 28. Dans le cas d'une unité latérale 5, l'ouverture radiale 21 ne s'étend préférentiellement pas plus bas que la vis 11.

En vue de réduire l'encombrement du déflecteur 16, la hauteur de la surface déflectrice 17 est inférieure à la hauteur de l'ouverture radiale 21. De préférence, la hauteur de la surface déflectrice 17 est inférieure aux deux tiers de la hauteur de l'ouverture radiale 21.

Afin de pouvoir laisser passer une quantité significative de produit, la largeur de l'ouverture radiale 21 est préférentiellement supérieure au dixième, et plus préférentiellement au septième, de la largeur de l'unité latérale 5 respective. Afin d'éviter des pertes tout en permettant l'obtention d'un andain large, la largeur de l'ouverture radiale 21 est inférieure au cinquième, et plus préférentiellement au tiers, de la largeur de l'unité latérale 5 respective.

Toujours afin de pouvoir laisser passer une quantité significative de produit, l'ouverture radiale 21 s'étend sur une hauteur sensiblement égale au diamètre de la vis 11. L'ouverture radiale 21 s'étend au moins sur une hauteur supérieure à la moitié du diamètre de la vis 11.

En vue d'épouser au mieux la trajectoire 19, chacune des paroi inférieure 24, basse 26, haute 27 et de rétention 28 est parallèle à une tangente de la trajectoire 19 passant par le point de la trajectoire 19 le plus proche de la paroi 24-28 respective.

Afin d'éviter les pertes de produit du flux dévié, le déflecteur 16 coulisse, lors de sa translation suivant l'axe de rotation 10, le long d'une surface de guidage 23 solidaire du caisson 14. En vue d'éviter l'intrusion de produit entre la surface déflectrice 17 et la surface de guidage 23, une paroi souple 25 peut être fixée à la surface déflectrice 17 de sorte à venir en contact avec la surface de guidage 23. La souplesse de la paroi souple 25 permet de réduire les frottements.

Ainsi que représenté sur la figure 3, afin d'éviter que du produit dévié par le déflecteur 16 ne soit entrainé au-dessus de la surface déflectrice 17, le ou chaque déflecteur 16 présente préférentiellement une surface rabatteuse 29 située en haut de la surface déflectrice 17. La surface rabatteuse 29 est accolée à la surface déflectrice 17. Afin de permettre au déflecteur 16 de rabattre efficacement le produit vers le sol, la surface rabatteuse 29 est préférentiellement inclinée vers l'avant. Aussi, la surface rabatteuse 29 présente une extrémité arrière plus basse que son extrémité avant. En vue de simplifier la fabrication du déflecteur 16 et de réduire son cout de revient, la surface rabatteuse 29 est plane, et de préférence réalisée par une tôle. Dans une variante de réalisation simplifiée représentée sur la figure 2, le déflecteur 16 ne comporte pas de surface rabatteuse 29 au-dessus de la surface déflectrice 17.

Ainsi que représenté en pointillés sur la figure 3, afin d'éviter une projection de pierres ou de tout objet solide à travers l'ouverture radiale 21, risquant notamment de blesser quelqu'un, la machine comporte préférentiellement un protecteur 30 situé derrière l'ouverture radiale 21 vu suivant le sens d'avance 1. Ainsi qu'il ressort de la figure 4, le protecteur 30 s'étend depuis le haut du caisson 14 jusqu'à une certaine distance derrière l'ouverture radiale 21, permettant ainsi de laisser passer le produit par l'ouverture radiale 21. Respectivement, le protecteur 30 s'étend depuis le dessus du caisson 14 jusqu'à une certaine distance derrière la paroi de rétention 28, rabattant encore davantage le du produit passé par l'ouverture radiale 21. De préférence, le protecteur 30 s'étend dans le prolongement de la surface rabatteuse 29 vu suivant l'axe de rotation 10. Ainsi qu'il ressort de la figure 3, la largeur du protecteur 30 est préférentiellement légèrement supérieure à celle de l'ouverture radiale 21. Aussi, la hauteur du protecteur 30 est préférentiellement légèrement supérieure à celle de l'ouverture radiale 21. En vue de simplifier sa compréhension, sur la figure 3, la surface du protecteur 30 est occultée ou transparente. Dans le deuxième mode de réalisation, le protecteur 30 peut s'étendre sur toute la largeur de l'ouverture radiale 21 (suivant l'axe de rotation 10). Alternativement, dans le deuxième mode de réalisation, à chaque déflecteur 16 est associé un protecteur 30 respectif s'étendant sensiblement sur la même largeur que la paroi de rétention 28 respective.

La ou chaque unité latérale 5 peut occuper une position de travail dans laquelle elle s'appuie sur le sol. Dans sa position de travail, l'unité latérale 5 permet de récolter du produit. Afin de réduire la largeur de la machine, la ou chaque unité latérale 5 peut également occuper une position relevée non représentée. Dans sa position relevée, l'unité latérale 5 ne travaille pas de produit. Afin de changer rapidement et facilement de position, l'unité latérale 5 peut pivoter entre sa position de travail et sa position relevée autour de l'axe de soulèvement 6. Dans ce document, à moins d'une mention contraire, les orientations et positions sont données lorsque l'unité 5,5' est en configuration de travail.

Le fait que la surface déflectrice 17 soit située derrière la vis 11, et notamment pas entre la vis 11 et le plan central 15, permet ainsi d'augmenter la garde au sol lorsqu'une unité latérale 5 est dans sa position relevée. La garde au sol est la distance séparant le sol de la machine, respectivement la distance minimale entre le sol et la machine. Augmenter la garde au sol permet donc d'éviter d'accrocher les andains lorsque la machine se déplace au-dessus d'andains 9 présents au sol, dans la position relevée de la ou chaque unité latérale 5.

Préférentiellement, la machine de fenaison est une faucheuse. Le dispositif de récolte 7 est alors une barre de coupe comportant des disques 32, chacun étant entrainé en rotation autour d'un axe d'entrainement vertical respectif lors du fonctionnement. A la périphérie de ces disques 32 sont montés des couteaux rotatifs pouvant dépasser de ladite périphérie afin de faucher des végétaux lors de leur rotation. Afin de réduire l'usure des couteaux, chaque couteau est préférentiellement monté pivotant avec le disque 32 respectif autour d'un axe vertical respectif.

Afin de simplifier la machine et de réduire son poids et son cout de revient, la machine est préférentiellement une faucheuse simple ne présentant ni rotor conditionneur ni rotor de soulèvement. De manière alternative, chaque unité latérale 5 comporte un rotor conditionneur situé entre le dispositif de récolte 7 et le convoyeur 8. Alternativement ou additionnellement, chaque unité latérale 5 comporte un rotor de soulèvement de type pickup permettant de ramasser du produit présent au sol. Alternativement, la machine pourrait être un andaineur dont le dispositif de récolte 7 comporte un rotor de soulèvement de type pickup.

Afin d'éviter toute perte de produit, lors de son transfert entre le dispositif de récolte 7 et la vis **11,** la vis **11** est préférentiellement entraînée de sorte que l'avant de la vis **11** tourne vers le bas. Pour cette même raison, le plan passant par les axes d'entrainement des disques 32 est préférentiellement parallèle à l'axe de rotation 10. Sur la figure 1, les disques 32 sont représentés par leur trajectoire extérieure respective lors de leur rotation autour de leur axe de rotation respectif.

Ainsi qu'il ressort de la figure 1 notamment, un bras 33 de portage est associé à chaque unité latérale 5. Au niveau de son extrémité intérieure, le bras 33 est articulé sur le châssis 2, au moins autour de l'axe de soulèvement 6 respectif. Au niveau de son extrémité extérieure, le bras 33 est relié à l'unité latérale 5 respective, préférentiellement par une articulation d'axe parallèle à l'axe de soulèvement 6. Dans la position de travail de l'unité 5, le bras 33 est sensiblement horizontal. De préférence, dans la position relevée de l'unité latérale 5, le bras 33 est sensiblement vertical, réduisant la largeur de la machine.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Machine de fenaison comportant un châssis 2 et au moins une unité 5,5' articulée avec le châssis 2 et comportant un dispositif de récolte 7 permettant de récolter un produit végétal, et un convoyeur 8 permettant de former un andain 9 avec le produit récolté et comportant une vis 11 sans fin pouvant être entrainée en rotation autour d'un axe de rotation 10 et présentant au moins une spire 13, un caisson 14 de guidage s'étendant au moins partiellement sous et derrière la vis 11, le caisson 14 présentant une ouverture radiale 21 située derrière une portion de la vis 11 attenante à l'extrémité intérieure 34 de la ou chaque spire 13, machine **caractérisée en ce qu'**elle comporte un déflecteur 16 au moins partiellement positionné derrière la vis 11, et **en ce que** le déflecteur 16 présente au moins une surface déflectrice 17 orientée transversalement à l'axe de rotation 10.

2. Machine selon la revendication 1, **caractérisée en ce qu'**un déflecteur 16 est associée à chaque spire 13 et positionné à proximité de l'extrémité intérieure 34 de la spire 13 associée.

3. Machine selon l'une quelconque des revendications 1 ou 2, **caractérisée en ce que** la ou chaque surface déflectrice 17 est située au moins partiellement dans l'ouverture radiale 21 vu suivant le sens d'avance 1.

4. Machine selon l'une quelconque des revendications 1 à 3, **caractérisée en ce que** la surface déflectrice 17 est inclinée vers l'arrière.

5. Machine selon l'une quelconque des revendications 1 à 4, **caractérisée en ce que** la surface déflectrice 17 est majoritairement située au-dessus l'axe de rotation 10.

6. Machine selon l'une quelconque des revendications 1 à 5, **caractérisée en ce qu'**une paroi de rétention 28 est associée à chaque spire 13, la ou chaque paroi de rétention 28 s'étendant derrière et sous la portion de la vis 11 attenante à l'extrémité intérieure 34 de la spire 13 associée et sous l'ouverture radiale 21 vu suivant le sens d'avance 1.

7. Machine selon l'une quelconque des revendications 1 à 6, **caractérisée en ce que** le ou chaque déflecteur 16 est translatable suivant un axe parallèle à l'axe de rotation 10.

8. Machine selon l'une quelconque des revendications 1 à 7, **caractérisée en ce que** le ou chaque déflecteur 16 présente une surface rabatteuse 29 située en haut de la surface déflectrice 17 et inclinée vers l'avant.

9. Machine selon l'une quelconque des revendications 1 à 8, **caractérisée en ce que** le caisson 14 présente une ouverture axiale 18 à son extrémité intérieure dans le prolongement de la vis 11, et **en ce que** la surface déflectrice 17 peut être positionnée dans l'ouverture axiale 18 au moins vu suivant le sens d'avance 1.

10. Machine selon l'une quelconque des revendications 6 à 9, **caractérisée en ce que** l'ouverture radiale 21 s'étend également entre les deux parois de rétention 28.
